(19) Europäisches Patentamt

European Patent Office

Office européen des brevets

(11) **EP 0 995 716 A1**

(12) **EUROPÄISCHE PATENTANMELDUNG**

(43) Veröffentlichungstag:
26.04.2000 Patentblatt 2000/17

(51) Int. Cl.$^7$: **C01B 3/58**, B01J 19/00, B01J 8/02, B01J 12/00

(21) Anmeldenummer: 99118368.2

(22) Anmeldetag: 16.09.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.10.1998 DE 19847211**

(71) Anmelder:
**DBB Fuel Cell Engines Gesellschaft mit beschränkter Haftung**
**73230 Kirchheim/Teck-Nabern (DE)**

(72) Erfinder:
• **Boneberg, Stefan**
**72660 Beuren (DE)**
• **Brauchle, Stefan**
**88400 Biberach/Riss (DE)**

• **Georg, Dirk**
**73230 Kirchheim/Nabern (DE)**
• **Gürtler, Joachim**
**73235 Weilheim/Teck (DE)**
• **Schäfer, Martin**
**73230 Kirchheim (DE)**
• **Schüssler, Martin**
**89073 Ulm (DE)**
• **Wolfsteiner, Matthias**
**91793 Alesheim (DE)**

(74) Vertreter:
**Kocher, Klaus-Peter Dipl.-Phys et al**
**DaimlerChrysler AG,**
**Intellectual Property Management,**
**FTP/A-C106**
**70546 Stuttgart (DE)**

(54) **Verfahren zum Betreiben einer Reformer/CO-Oxidationseinheit**

(57) Die Erfindung betrifft ein Verfahren zum Betreiben einer Vorrichtung zur Erzeugung von wasserstoffreichem Gas, die einen Reformer zur katalytischen Wasserdampfreformierung eines Wasserdampf/Brennstoffgemisches unter Zufuhr von Wärmeenergie und eine CO-Oxidationsstufe zur Entfernung von Kohlenmonoxid aus dem wasserstoffreichem Gas unter Wärmeabgabe aufweist, wobei der Reformer und die CO-Oxidationsstufe thermisch gekoppelt sind. Erfindungsgemäß wird die der CO-Oxidationsstufe zugeführte Sauerstoffmenge in Abhängigkeit von der Gastemperatur in oder am Ausgang der Reformer/CO-Oxidationsstufe eingestellt. Dies kann mit Hilfe einer Regelung, einer Kombination aus Steuerung und Regelung oder mit Hilfe eines adaptiven Kennfeldes erfolgen.

**Beschreibung**

Die Erfindung betrifft ein Verfahren zum Betreiben einer Vorrichtung zur Erzeugung von wasserstoffreichem Gas gemäß dem Oberbegriff des Patentanspruchs 1.

Aus einer noch unveröffentlichten Patentanmeldung der Anmelderin (Az: DE 197 27 589.3) ist eine Vorrichtung zur Erzeugung von wasserstoffreichem Gas bekannt, die einen Reformer zur katalytischen Wasserdampfreformierung eines Wasserdampf/Brennstoffgemisches unter Zufuhr von Wärmeenergie und eine CO-Oxidationsstufe zur selektiven katalytischen Oxidation des Kohlenmonoxids aus dem wasserstoffreichem Gas unter Wärmeabgabe aufweist, wobei der Reformer und die CO-Oxidationsstufe thermisch gekoppelt sind. Der Sauerstoff, der für die selektive katalytische Oxidation in der CO-Oxidationsstufe benötigt wird, wird entweder in die Gaszuleitung oder direkt in die CO-Oxidationsstufe eingebracht. Die Menge an zugeführtem Sauerstoff wird so eingestellt, daß sich ein atomares Verhältnis von CO zu 0 von ungefähr 1:1 bis 1:4 einstellt.

Es ist die Aufgabe der Erfindung, ein Verfahren zum Betreiben einer Vorrichtung zur Erzeugung von wasserstoffreichem Gas zu schaffen, mit dem die Auslastung des eingesetzten Reformierungskatalysators über den gesamten Lastbereich und auch über die gesamte Lebensdauer verbessert werden kann.

Dieses Problem wird durch ein Verfahren mit den Merkmalen des Patentanspruchs 1 gelöst.

Durch die Regelung der zugeführten Sauerstoffmenge anhand der Temperatur in oder am Ausgang der Reformer/CO-Oxidationsstufe kann sichergestellt werden, daß der Reformierungskatalysator über den gesamten Lastbereich mit guter Auslastung betrieben wird. Denn durch die zugeführte Sauerstoffmenge wird die Reaktionsrate in der CO-Oxidationsstufe und somit die dem Gesamtsystem zugeführte Wärmemenge eingestellt. Über diesen Regelkreis wird daher die Temperatur in der Reformer/CO-Oxidationsstufe auf einem vorgegeben Wert gehalten, so daß die Reaktion unabhängig von Laständerungen oder auch Alterungserscheinungen unter optimalen Bedingungen ablaufen kann.

Durch die Einstellung der Sauerstoffmenge über eine gesteuerte Grundmenge und einer zusätzlichen Differenzdruckregelung anhand der Gasgemischtemperatur kann der Regelaufwand verringert werden.

Weitere Vorteile und Ausgestaltungen gehen aus den Unteransprüchen und der Beschreibung hervor. Die Erfindung ist nachstehend anhand einer Zeichnung näher beschrieben. Die insgesamt mit 1 gekennzeichnete Reformer/CO-Oxidationsstufe besteht aus einem gemeinsamen Gehäuse 2, in dem eine Vorrichtung 3 zur katalytischen Wasserdampfreformierung eines Wasserdampf/Brennstoffgemisches - im folgenden als Reformer bezeichnet - und eine Vorrichtung 4 zur selektiven katalytischen Kohlenmonoxid-Oxidation - im folgenden als CO-Oxidationsstufe bezeichnet - integriert sind. Die Reformer/CO-Oxidationsstufe 1 ist als Wärmetauscher aufgebaut, wobei zwischen dem Reformer 3 und dem CO-Oxidationsstufe 4 eine Wärmeaustauschfläche 5 vorgesehen ist. Als Brennstoff kommen beliebige kohlenwasserstoffhaltigen Ausgangsstoffe in Frage, wobei das folgende Ausführungsbeispiel anhand von Methanol als Brennstoff erläutert wird.

Dem Reformer 3 wird über eine Zuleitung 6 ein gasförmiges Wasserdampf/Methanolgemisch zugeführt. Das Reformat wird dann nach dem Durchströmen des Reformers 3 über eine Reformatzuleitung 7 direkt in die CO-Oxidationsstufe 4 geführt.

Vorzugsweise wird die Reformatzuleitung 7 so ausgeführt, daß der Reformer 3 und die CO-Oxidationsstufe 4 parallel vom Wasserdampf/Methanolgemisch bzw. dem Reformat durchströmt werden. Es ist weiterhin möglich, daß der Reformer 3 mehrere Reaktionskammern aufweist, daß die CO-Oxidationsstufe 4 mehrere Reinigungskammern aufweist, und daß die Reaktions- und Reinigungskammern 3, 4 abwechselnd angeordnet sind und jeweils über eine gemeinsame Wärmeaustauschfläche 5 in Wärmekontakt zueinander stehen. Neben solchen Plattenanordnungen sind jedoch auch Rohrbündelanordnungen geeignet.

Über eine Sauerstoffleitung 8 wird der CO-Oxidationsstufe 4 außerdem ein sauerstoffhaltiges Gas - vorzugsweise Luft - zugeführt. Dies kann entweder, wie im Ausführungsbeispiel dargestellt, in die Reformatzuleitung 7 oder auch direkt in die CO-Oxidationsstufe 4 beziehungsweise über mehrere über die Reaktorlänge verteilte Dosierstellen erfolgen. Nach dem Durchströmen der CO-Oxidationsstufe 4 wird das gereinigte Reformat dann über eine weitere Leitung 9 direkt einer ebenfalls nicht gezeigten Brennstoffzelle oder einer beziehungsweise mehreren weiteren Gasreinigungsstufen zugeführt.

Bei der katalytischen Wasserdampfreformierung von Methanol wird ein Gemisch aus Methanol und Wasserdampf unter Zufuhr von Wärme an einem geeigneten Katalysator zu Wasserstoff umgesetzt, wobei gleichzeitig Kohlendioxid entsteht:

$$CH_3OH + H_2O \rightarrow 3\,H_2 + CO_2 \text{ oder } CH_3OH \rightarrow 2\,H_2 + CO$$

Bei mobilen Anwendungen, beispielsweise bei der Wasserdampfreformierung für Brennstoffzellen in Kraftfahrzeugen, ist es wichtig, daß die benötigte Ausbeute an Wasserstoffgas bei möglichst geringem Platzbedarf und Gewicht bereitgestellt werden kann. Da die Reaktion nur unter Wärmezufuhr abläuft, ist die Ausbeute jedoch abhängig vom Wärmeeintrag. Daher muß der Reaktor so ausgebildet sein, daß ein optimaler Wärmeübergang von einer bereitgestellten Wärmequelle auf das Reformgas und auf das Katalysatormaterial gewährleistet wird.

Der CO-Oxidationsstufe 4 wird zur Entfernung von Kohlenmonoxid CO aus dem im Reformer 3 erzeugten $H_2$-reichen Gas mittels selektiver katalytischer Oxidation verwendet. Dieses sogenannte Reformat, bestehend beispielsweise aus Wasserstoff mit einem CO-Anteil von 0,5-3 Vol%, wird nach entsprechender Reinigung vorzugsweise für den mobilen Einsatz von PEM-Brennstoffzellen in Fahrzeugen verwendet. Bei der selektiven katalytischen Oxidation wird dem Reformat über die Sauerstoffleitung 8 zusätzlich Sauerstoff, beispielsweise in Form von Umgebungsluft, zugeführt, wobei dann das Kohlenmonoxid CO durch den Sauerstoff $O_2$ zu Kohlendioxid $CO_2$ oxidiert wird. Diese Reaktion wird an einem geeigneten Oxidationskatalysator, beispielsweise Platin und/oder Ruthenium auf einem geeigneten Träger, wie $Al_2O_3$ oder einem Zeolith in Pulverform, durchgeführt.

Da es sich bei der selektiven katalytischen Oxidation um eine stark exotherme Reaktion handelt, reicht die in der CO-Oxidationsstufe 4 freigesetzte und mit Hilfe der Wärmeaustauschfläche 5 auf den Reformer 3 übertragene Energie für eine vollständige Beheizung des Reformers 3 aus. Über die Menge an zugeführten Sauerstoff läßt sich die Reaktionsrate in der CO-Oxidationsstufe 4 einstellen. Wird mehr Sauerstoff zugeführt, so wird mehr CO oder gegebenenfalls auch Wasserstoff oder nicht umgewandeltes Methanol in der CO-Oxidationsstufe 4 oxidiert. Dadurch wird mehr Wärmeenergie in der CO-Oxidationsstufe 4 erzeugt und über die Wärmeaustauschfläche 5 auf den Reformer 3 übertragen, so daß sich dort die Temperatur erhöht. Wir dagegen weniger Sauerstoff in die CO-Oxidationsstufe 4 eingebracht, so reduziert sich die Reaktionsrate und somit auch die Temperatur im Reformer 3.

Anhand der Temperatur $T_G$ des Gasgemischstromes kann somit ein geschlossener Regelkreis für die zugeführte Sauerstoffmenge $m_S$ realisiert werden. Die Temperatur $T_G$ wird an einer oder auch mehreren Stellen in oder vorzugsweise auch am Ausgang der Reformer/CO-Oxidationsstufe 1 gemessen. Im Ausführungsbeispiel ist hierzu in der Leitung 9 ein Temperatursensor 10 vorgesehen. In Abhängigkeit von dieser gemessenen Temperatur $T_G$ kann dann die zugeführte Sauerstoffmenge $m_s$ eingestellt und somit die Temperatur $T_G$ in der Reformer/CO-Oxidationsstufe 1 auf einen vorgegebenen Sollwert $T_S$ geregelt werden.

Im Ausführungsbeispiel wurde die Einstellung der Temperatur $T_G$ durch eine Kombination aus Steuerung und Regelung realisiert. Die zugeführte Sauerstoffmenge $m_S$ wird durch ein in der Sauerstoffleitung 8 angeordnetes Ventil 11 eingestellt. Die Ansteuerung dieses Ventils 11 erfolgt zum einen anhand eines lastabhängigen Kennfeldes, zum anderen anhand eines Regelalgorithmus in Abhängigkeit von der gemessenen Temperatur $T_G$. Hierzu wird jeweils in Abhängigkeit von der momentanen Last aus einem Kennfeld - schematisch als Block 12 dargestellt - eine Grundmenge $m_G$ für den zuzuführenden Sauerstoff ausgelesen. Außerdem wird aus der gemessenen Temperatur $T_G$ anhand eines Regelalgorithmus - schematisch als Block 13 dargestellt - eine Differenzmenge $\Delta m$ für den zuzuführenden Sauerstoff ermittelt. Für die Regelung kann jeder geeignete Regelalgorithmus, beispielsweise ein sogenannter PID-Regeler, verwendet werden. In einer Summierstelle 14 werden dann die beiden Werte $m_G$ und $\Delta m$ addiert und als zuzuführende Sauerstoffmenge $m_S = m_G + \Delta m$ dem Ventil 11 übergeben. Hierbei kann $\Delta m$ auch einen negativen Wert annehmen, falls die mit Hilfe des Temperatursensors 10 gemessene Temperatur $T_G$ zu hoch ist.

Die zuzuführende Sauerstoffmenge $m_S$ kann beispielsweise aus dem Kennfeld 12 bzw. aus dem Regelalgorithmus 13 als Massenstrom bereitgestellt werden. In diesem Fall muß dann dieser Massenstrom von einer nicht gezeigten Steuervorrichtung des Ventils 11 in ein geeignetes Steuersignal umgesetzt werden. Bei Verwendung eines Magnetventils würde dies beispielsweise der Taktfrequenz entsprechen.

Diese Kombination von Steuerung und Regelung hat den Vorteil, daß der wesentliche Teil der zuzuführenden Sauerstoffmenge $m_s$ durch die Steuerung vorgegeben wird, während die Regelung lediglich last- oder alterungsbedingte Abweichungen $\Delta m$ ausgleichen muß. Somit wird der Regelaufwand reduziert. Es ist jedoch prinzipiell auch möglich, die gesamte Sauerstoffmenge $m_s$ über eine Regelung einzustellen. Weiterhin ist es auch möglich, die zuzuführende Sauerstoffmenge $m_S$ ausschließlich über ein adaptives Kennfeld zu ermitteln. Die gemessene Temperatur $T_G$ würde in diesem Falle dazu verwendet, die Werte im Kennfeld 12 anzupassen.

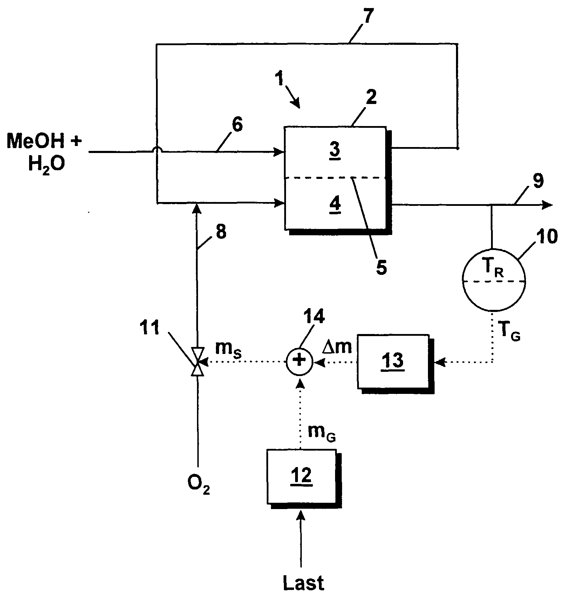

**Patentansprüche**

1. Verfahren zum Betreiben einer Vorrichtung (1) zur Erzeugung von wasserstoffreichem Gas, die einen Reformer (3) zur katalytischen Wasserdampfreformierung eines Wasserdampf/Brennstoffgemisches unter Zufuhr von Wärmeenergie, eine CO-Oxidationsstufe (4) zur selektiven katalytischen Oxidation des Kohlenmonoxids aus dem wasserstoffreichem Gas unter Wärmeabgabe und Mittel (5) zur Übertragung von Wärmeenergie aus der CO-Oxidationsstufe (4) in den Reformer (3) aufweist, wobei vor oder in der CO-Oxidationsstufe (4) ein sauerstoffhaltiges Gas in einer vorgegebenen Menge ($m_S$) zum Gasgemischstrom zugeführt wird, **dadurch gekennzeichnet,** daß die Menge ($m_S$) des zugeführten sauerstoffhaltigen Gases in Abhängigkeit von der Temperatur ($T_G$) des Gasgemischstromes in und/oder am Ausgang der Reformer/CO-Oxidationsstufe (1) eingestellt wird.

2. Verfahren nach Anspruch 1,

**dadurch gekennzeichnet,**
daß anhand eines lastabhängigen Kennfeldes (12) eine Grundmenge ($m_G$) für das zuzuführende sauerstoffhaltige Gas vorgegeben wird und daß basierend auf dieser Grundmenge ($m_G$) anhand einer Differenzmengenregelung ($m_S = m_G + \Delta m$) die Temperatur ($T_G$) des Gasgemischstromes in und/oder am Ausgang der Reformer/CO-Oxidationsstufe (1) auf einen Temperatur-Sollwert ($T_S$) eingestellt wird.

3. Verfahren nach Anspruch 1,
   **dadurch gekennzeichnet,**
   daß die Menge ($m_S$) des zugeführten sauerstoffhaltigen Gases in Abhängigkeit von der Temperatur ($T_G$) des Gasgemischstromes in und/oder am Ausgang der Reformer/CO-Oxidationsstufe (1) geregelt wird.

4. Verfahren nach Anspruch 1,
   **dadurch gekennzeichnet,**
   daß die Menge ($m_G$) des zuzuführenden sauerstoffhaltige Gas anhand eines lastabhängigen Kennfeldes (12) gesteuert wird, wobei das Kennfeld (12) anhand der Temperatur ($T_G$) adaptiv angepaßt wird.

Europäisches
Patentamt

**EUROPÄISCHER RECHERCHENBERICHT**

Nummer der Anmeldung

EP 99 11 8368

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 44 895 C (DAIMLER BENZ AG) 27. Februar 1997 (1997-02-27) * Spalte 2, Zeile 12 - Zeile 55; Ansprüche 1-4 * | 1-4 | C01B3/58 B01J19/00 B01J8/02 B01J12/00 |
| A | D. DINDELEUX, L. SIDERIADES: "Technique de la Regulation Industrielle" 1986 , EYROLLES , PARIS XP002127052 * Seite 112; Abbildung 4.2A * | 1-4 | |
| A | EP 0 834 948 A (TOYOTA MOTOR CO LTD) 8. April 1998 (1998-04-08) * Spalte 3, Zeile 22 - Zeile 38; Ansprüche 4,8 * | 1 | |
| | | | **RECHERCHIERTE SACHGEBIETE (Int.Cl.7)** C01B B01J |

Der vorliegende Recherchenbericht wurde für alle Patentansprüche erstellt

| Recherchenort | Abschlußdatum der Recherche | Prüfer |
|---|---|---|
| DEN HAAG | 7. Januar 2000 | Siebel, E |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 8368

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-01-2000

| Im Recherchenbericht angeführtes Patentdokument | Datum der Veröffentlichung | Mitglied(er) der Patentfamilie | Datum der Veröffentlichung |
|---|---|---|---|
| DE 19544895 C | 27-02-1997 | EP 0776861 A<br>US 5874051 A | 04-06-1997<br>23-02-1999 |
| EP 0834948 A | 08-04-1998 | JP 10101303 A | 21-04-1998 |

EPO FORM P0461

Für nähere Einzelheiten zu diesem Anhang : siehe Amtsblatt des Europäischen Patentamts, Nr. 12/82